# EUROPEAN PATENT APPLICATION

(11) **EP 4 357 051 A1**
(43) Date of publication of application: **24.04.2024**
(21) Application number: 22202668.4
(22) Date of filing: 20.10.2022
(51) Int. Cl.: B22F 12/90, B33Y 10/00, B33Y 30/00, B33Y 40/00, B33Y 50/02

(54) **CALIBRATION OF MULTIPLE LASERS IN AN ADDITIVE MANUFACTURING PROCESS**

(71) Applicant: TRUMPF Additive Manufacturing Italia S.r.l., 36015 Schio (VI) (IT); Trumpf Laser- und Systemtechnik GmbH, 71254 Ditzingen (DE)
(72) Inventor: Michieli, Niccolò, 36015 Schio (IT); Mantoan, Elia, 36036 Torrebelvicino (IT); Pfitzner, Dieter, 75382 Althengstett (DE); BLICKLE, Valentin, 70190 Stuttgart (DE); Lampert, Bastian, 74392 Freudental (DE)
(74) Representative: Trumpf Patentabteilung

(57) **Abstract**

A calibration method for calibrating a manufacturing device (1) for additively producing a three-dimensional object (19) by applying layer by layer and selectively solidifying a building material (15), preferably a powder, within a build area (3) in a working plane (18), wherein the manufacturing device (1) comprises at least three scanning units (9a, 9b, 9c), at least two of which are capable of directing a beam (11a, 11b, 11c) generated by a respective beam generating unit (10a, 10b, 10c) to different target points in the working plane (18), which are located within a scanning region assigned to the respective scanning unit (9a, 9b, 9c), wherein the scanning regions of the at least three scanning units (9a, 9b, 9c) overlap in an overlap area, wherein the calibration method comprises the following steps: - directing an observer optical system (12) via the third scanning unit (9c) on at least a portion of the overlap area, - irradiating at least a portion of the building material (15) in the overlap area with the first beam generating unit (10a) assigned to the first scanning unit (9a) to generate a first predefined pattern (14a) at a predefined position (X₀, Y₀) on the working plane (18), which is in view of the observer optical system (12), and - irradiating at least a portion of the building material (15) in the overlap area with the second beam generating unit (10b) assigned to the second scanning unit (9b) to generate a second predefined pattern (14b) at a predefined position (X₀₊₁, Y₀₊₁) on the working plane (18), which is in view of the observer optical system (12), wherein the observer optical system (12) detects the positionings of the first predefined pattern (14a) and the second predefined pattern (14b), and wherein a control unit (5) compares the positionings of the first predefined pattern (14a) and the second predefined pattern (14b) to compute a misalignment error (16) between the first scanning unit (9a) and the second scanning unit (9b).

## Description

### Technical field

The present disclosure relates generally to a calibration method for calibrating a manufacturing device for additively producing a three-dimensional object by applying layer by layer and selectively solidifying a building material, preferably a powder, within a build area in a working plane. Moreover, the present disclosure relates to a manufacturing method for additively producing a three-dimensional object by applying layer by layer and selectively solidifying a building material, a computer program which can be loaded into a programmable control unit, a control device for a manufacturing device for additively producing a three-dimensional object by applying layer by layer and selectively solidifying a building material, and a manufacturing device for additively producing a three-dimensional object by applying layer by layer and selectively solidifying a building material.

### Background

In additive manufacturing such as selective laser sintering or selective laser melting, a powdered material such as a metal or ceramic powder is irradiated with electromagnetic radiation. Successively, thin layers of powder are provided within a chamber on a building platform to form three-dimensional objects by irradiating the respective layers of powder with an irradiation beam such as a laser beam. Respective devices are referred to as additive manufacturing devices, 3D-printing systems, selective laser sintering machines, or selective laser melting machines and the like. For the operation of such a device, it is referred to EP 2 732 890 A2, for example.

For increasing the speed of the building process or the size of an object that can be built, multiple irradiation beams can be used within one additive manufacturing device and for one building platform. For example, in an additive manufacturing device using multiple laser beams, the alignment of the coordinate systems of the underlying scanning optics that each direct a laser beam is to be maintained during the complete building process in order to guarantee a proper alignment of the scanned laser trajectories in the layer plane. In particular, an accuracy of the alignment between different laser beams/scanning optics is preferred to be in the range of 50 % of a laser beam diameter and less. Typically, a laser beam has a diameter of 80 µm.

With respect to calibrating an irradiation system of an apparatus for producing a three-dimensional workpiece, WO 2019/158394 A1 discloses irradiating a first irradiation beam and a second irradiation beam onto an irradiation plane such that operating axes of irradiation patterns traverse each other. A calibration is performed by determining a position of an intersection point between the irradiation patterns of the first irradiation beam and the second irradiation beam. Moreover, EP 2 983 898 A1 discloses determining a relative positional deviation between a first and second test pattern generated by two laser beams in a target within a powder layer for calibrating respective scanners. Furthermore, WO 2019/161886 A1 discloses building a first test structure by a first radiation beam and a second test structure by a second radiation beam and determining an offset between the two test structures.

A proper alignment of multiple laser scanners/scanning optics is in particular essential if a single object is manufactured with multiple irradiation beams. It is noted that in particular for large parts and temperature fluctuations, thermal effects onto the various components and the built part may require continuous calibration of the laser scanners during the manufacturing.

Therefore, it is in particular an object of the present disclosure to provide a calibration procedure that can easily be performed in an automated manner, can be implemented in a simple manner also in existing additive manufacturing devices, and can be performed preferably throughout the manufacturing process.

In general, the present disclosure is directed, at least in part, to improving or overcoming one or more aspects of the prior systems, and in particular to provide an efficient approach for calibrating/aligning coordinate systems associated to respective irradiation beams in a multi-beam additive manufacturing device.

Thus, the present disclosure is directed, at least in part, to improving or overcoming one or more aspects of prior systems.

### Summary of the disclosure

Some of the objects may be achieved by a calibration method for calibrating a manufacturing device for additively producing a three-dimensional object by applying layer by layer and selectively solidifying a building material, preferably a powder, within a build area in a working plane as recited in claims 1 and 2, a manufacturing method for additively producing a three-dimensional object by applying layer by layer and selectively solidifying a building material as recited in claim 12, a computer program which can be loaded into a programmable control unit as recited in claim 13, a control device for a manufacturing device for additively producing a three-dimensional object by applying layer by layer and selectively solidifying a building material as recited in claim 14, and a manufacturing device for additively producing a three-dimensional object by applying layer by layer and selectively solidifying a building material as recited in claim 15. Further aspects and developments are given in the dependent claims.

According to a first aspect, the present disclosure is directed to a calibration method for calibrating a manufacturing device for additively producing a three-dimensional object by applying layer by layer and selectively solidifying a building material, preferably a powder, within a build area in a working plane, wherein the manufacturing device comprises at least three scanning units, at least two of which are capable of directing a beam generated by a respective beam generating unit to different target points in the working plane, which are located within a scanning region assigned to the respective scanning unit, wherein the scanning regions of the at least three scanning units overlap in an overlap area, wherein the calibration method comprises the following steps: directing an observer optical system via the third scanning unit on at least a portion of the overlap area, irradiating at least a portion of the building material in the overlap area with the first beam generating unit assigned to the first scanning unit to generate a first predefined pattern at a predefined position or rather a predefined point on the working plane, which is in view of the observer optical system, and irradiating at least a portion of the building material in the overlap area with the second beam generating unit assigned to the second scanning unit to generate a second predefined pattern at a predefined position on the working plan, which is in view of the observer optical system, wherein the observer optical system detects the positionings of the first predefined pattern and the second predefined pattern, and wherein a control unit compares the positionings of the first predefined pattern and the second predefined pattern to compute a misalignment error between the first scanning unit and the second scanning unit.

This inventive calibration method according to the first aspect provides a calibration procedure that can easily be performed in an automated manner, can be implemented in a simple manner also in existing additive manufacturing devices, and can be performed preferably throughout the manufacturing process. Further, this calibration method is independent from calibration errors of the scanning unit assigned to the observer optical system, as the observer optical system is only used as observer, which is stationary at least during process.

According to a second aspect, the present disclosure is directed to a calibration method for calibrating a manufacturing device for additively producing a three-dimensional object by applying layer by layer and selectively solidifying a building material, preferably a powder, within a build area in a working plane, wherein the manufacturing device comprises at least three scanning units, at least one of which is capable of directing a beam generated by a respective beam generating unit to different target points in the working plane, which are located within a scanning region assigned to the respective scanning unit, wherein the scanning regions of the at least three scanning units overlap in an overlap area, wherein the calibration method comprises the following steps: directing at least a first observer optical system via the first scanning unit and a second observer optical system via the second scanning unit on at least a portion of the overlap area, irradiating at least a portion of the building material in the overlap area with the third beam generating unit assigned to the third scanning unit to generate a predefined pattern at a predefined position on the working plane, which is in view of at least the first observer optical system and the second observer optical system, wherein at least the first observer optical system and the second observer optical system detect the positioning of the predefined pattern with respect to the respective observer optical system, and wherein a control unit compares the positionings of the predefined pattern detected by the first observer optical system and the predefined pattern detected by the second observer optical system to compute a misalignment error between the first scanning unit and the second scanning unit.

This inventive calibration method according to the second aspect provides a calibration procedure that can easily be performed in an automated manner, can be implemented in a simple manner also in existing additive manufacturing devices, and can be performed preferably throughout the manufacturing process.

Moreover, it may be advantageous that in multilaser devices multiple observer optical systems are simultaneously used to observe the beam of a beam generating unit in order to calibrate the scanning units assigned to the multiple observer optical systems. This shortens the calibration process, as the multiple observer optical systems are capable of using the signal of a single beam.

In some embodiments, the misalignment error between the first scanning unit and the second scanning unit is defined by an offset in X-direction and/or Y-direction parallel to the working plane.

Alternatively or additionally, the misalignment error is corrected by adjusting the positioning of the first scanning unit and/or the second scanning unit, in particular by minimizing the offset between the first scanning unit and the second scanning unit in X-direction and/or Y-direction parallel to the working plane. This enables an automated and simplified correction of the misalignment error in X-direction and/or Y-direction between the scanning units or rather beams assigned to the scanning units, respectively.

In some embodiments, the observer optical system is a photodiode, in particular a single pixel photodiode. By using a photodiode, single pixels of the working plane may be sampled to generate a precise measurement result.

Preferably, the photodiode is equipped with an optical setup that: defines a field of view of the photodiode as a predefined area on the working plane, and/or filters the light so that only a predefined range of wavelengths can be detected by the photodiode. For instance, such a predefined range of wavelengths may be that of the beam generated by the beam generating unit, which preferably is in the range of 1070 ± 20 nm. According to this, any interference such as environmental influences or noise can be suppressed to improve the measurement result.

Additionally or alternatively, the beam heats up the working plane, and the point of impact of the beam on the working plane is detected indirectly by thermal radiation or plasma radiation.

In some embodiments, the field of view of the photodiode is configured to capture at least the predefined position and/or the predefined position on the working plane, and wherein the field of view preferably comprises a diameter of 5 mm or less, more preferably comprises a diameter of 3 mm or less, and even more preferably comprises a diameter in a range of 1 mm and 2 mm. The field of view is used to define a predefined area, in which the photodiode is capable of receiving a signal.

Alternatively or additionally, by irradiating the building material in the working plane, the building material is heated up to a temperature under the melting point of the building material. As the building material such as powder is neither marked nor melted, the building process of the three-dimensional object is not influenced by an already formed/transformed building material. Thus, the quality of the three-dimensional object can be enhanced significantly.

In some embodiments, the predefined pattern is centered at the predefined position or the predefined position, and wherein the predefined pattern is large enough to completely cover the field of view of the photodiode. As the predefined pattern is capable of completely covering the field of view, the observer optical system can provide a signal at every point, i.e. the beam is not in the field of view "0", or the beam is in the field of view "1".

According to a further embodiment, the predefined pattern has the shape of a polygon, star or circle or the like. Preferably, all vectors of the predefined pattern are processed from the inside outwards or from the outside inwards. By doing this, the measurement result is enhanced, as there are always the same directions in which the beam exits or enters the field or view. Preferably, the vectors always enter or exit the field of view at substantially the same angle.

Alternatively or additionally, the field of view of the photodiode is centered at the predefined position or the predefined position to generate a heat map or a time-dependent signal by means of which a shift of the predefined pattern with respect to the field of view of the photodiode can be detected. It is advantageous that the photodiode and the predefined pattern are centered at the same position. Thus, the measurement result is independent from the field of view of the observer optical system/photodiode (cf. first aspect of the present disclosure) or the scanning unit (cf. second aspect of the present disclosure).

According to a third aspect, the present disclosure is directed to a manufacturing method for additively producing a three-dimensional object by applying layer by layer and selectively solidifying a building material, comprising the following steps: applying a layer of the building material in a build area within a working plane, solidifying the layer of the building material at positions that correspond to the respective cross-section of the object by selective irradiation within the build area by at least one beam of a radiation suited for solidifying the building material, and repeating the steps of applying and solidifying until the three-dimensional object is completed, wherein a calibration method is carried out at least once before the building process and/or during the building process, e.g. every fifth layer.

This inventive calibration method according to the third aspect provides a calibration procedure that can easily be performed in an automated manner, can be implemented in a simple manner also in existing additive manufacturing devices, and can be performed preferably throughout the manufacturing process.

According to a fourth aspect, the present disclosure is directed to a computer program which can be loaded into a programmable control unit which comprises program code means for executing all the steps of a calibration method and/or a manufacturing method when the computer program is executed on the control unit.

This inventive calibration method according to the fourth aspect provides a calibration procedure that can easily be performed in an automated manner, can be implemented in a simple manner also in existing additive manufacturing devices, and can be performed preferably throughout the manufacturing process.

According to a fifth aspect, the present disclosure is directed to a control device for a manufacturing device for additively producing a three-dimensional object by applying layer by layer and selectively solidifying a building material, wherein the manufacturing device comprises: an application device for applying a layer of the building material to a build area within a working plane, and at least three scanning units, at least one of which is capable of directing a beam to different target points in the working plane, which target points are located within a scanning region assigned to a respective scanning unit, wherein the scanning regions of the at least three scanning units overlap in an overlap area, wherein a control unit is configured to control the manufacturing device such that it: repeats the steps of applying and selectively solidifying until the object is completed, and carries out a calibration method at least once before and/or during of building of the object.

This inventive calibration method according to the fifth aspect provides a calibration procedure that can easily be performed in an automated manner, can be implemented in a simple manner also in existing additive manufacturing devices, and can be performed preferably throughout the manufacturing process.

According to a sixth aspect, the present disclosure is directed to a manufacturing device for additively producing a three-dimensional object by applying layer by layer and selectively solidifying a building material, comprises an application device for applying a layer of the building material to a build area within a working plane, and at least three scanning units, at least one of which is capable of directing a beam to different target points in the working plane, which target points are located within a scanning region assigned to a respective scanning unit, wherein the scanning regions of the at least three scanning units overlap in an overlap area, wherein the manufacturing device is configured and/or controlled such that: it repeats the steps of applying and selectively solidifying until the object is completed, and carries out a calibration method at least once before and/or during building of the object.

This inventive calibration method according to the sixth aspect provides a calibration procedure that can easily be performed in an automated manner, can be implemented in a simple manner also in existing additive manufacturing devices, and can be performed preferably throughout the manufacturing process.

Other features and aspects of this disclosure will be apparent from the following description and the accompanying drawings.

### Brief description of the drawings

The accompanying drawings, which are incorporated herein and constitute a part of the specification, illustrate exemplary embodiments of the disclosure and, together with the description, serve to explain the principles of the disclosure. In the drawings:
- Fig. 1: schematically shows a manufacturing device for powder bed-based additive manufacturing of components,
- Fig. 2: schematically shows a manufacturing device according to a first embodiment of the present invention,
- Fig. 3: schematically shows the manufacturing device according to the first embodiment of the present invention,
- Fig. 4: schematically shows a predefined pattern generated by a first beam of a first beam generating unit assigned to a first scanning unit,
- Fig. 5: schematically shows a predefined pattern generated by a second beam of a second beam generating unit assigned to a second scanning unit,
- Fig. 6: schematically shows a first heat map generated during the exposure of the predefined pattern according to Fig. 4,
- Fig. 7: schematically shows a second heat map generated during the exposure of the predefined pattern according to Fig. 5,
- Fig. 8: schematically shows a manufacturing device according to a second embodiment of the present invention,
- Fig. 9: schematically shows a predefined pattern generated by a third beam of a third beam generating unit assigned to a third scanning unit,
- Fig. 10: schematically shows the predefined pattern generated by the third beam of the third beam generating unit assigned to the third scanning unit,
- Fig. 11: schematically shows a first heat map generated during the exposure of the predefined pattern according to Fig. 9 via a first observer optical system, and
- Fig. 12: schematically shows a second heat map generated during the exposure of the predefined pattern according to Fig. 10 via a second observer optical system.

### Detailed description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of protection. Rather, the scope of protection shall be defined by the appended claims.

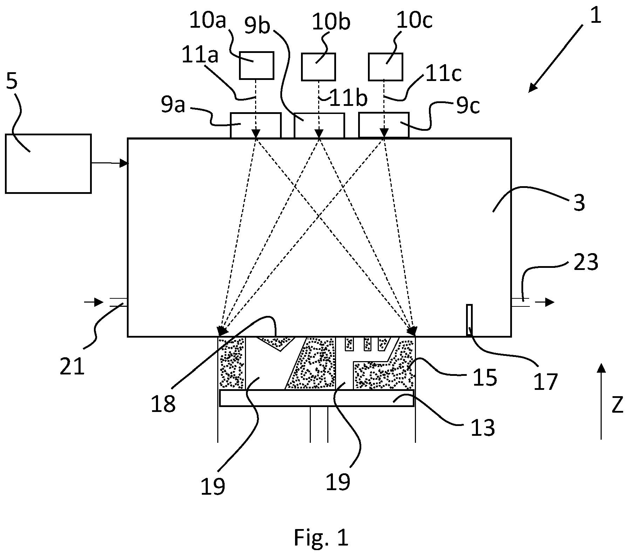

**Fig. 1** schematically shows a manufacturing device 1 with a build area 3 or rather a process chamber and a control unit 5. Control unit 5 has a data carrier for storing control programs. Manufacturing device 1 also has at least three scanning units 9a, 9b, 9c, each of which deflects a beam 11a, 11b, 11c by means of a respective beam generating unit 10a, 10b, 10c. For example, for a laser beam, each scanning unit 9a, 9b, 9c may comprise a scanner mirror (not shown) rotatable in two directions or two scanner mirrors rotatable in one direction. For example, scanner unit 9a, 9b, 9c may comprise a galvanometer scanner. Alternatively, for an electron beam, scanner unit 9a, 9b, 9c may comprise multiple pairs of electrodes between which an electric field may be applied to deflect the electron beam.

Manufacturing device 1 further comprises a substrate plate 13 arranged below scanning units 9a, 9b, 9c and on which a building material 15, such as a powder or rather a powder bed, is applied in layers. For this purpose, substrate plate 13 is adjusted by a desired distance in the -Z-direction, i.e. in the direction of increasing distance from scanner units 9a, 9b, 9c, and a new building material layer is then applied using an application device 17, such as a coater or a powder pusher. Wipers, blades or cylinders, for example, can also be considered as application devices 17. In this particular case, scanning units 9a, 9b, 9c are suitable for deflecting their respective beam 11a, 11b, 11c over the complete building material 15. Thus, in this embodiment, the entire building material surface represents a common working plane 18, in which the beams 11a, 11b, 11c can solidify building material 15. After solidification of the uppermost building material layer in each case, substrate plate 13 can be moved again in the -Z-direction and a new building material layer is applied via application device 17, in order to manufacture a three-dimensional object 19 in layers.

Build area 3 is gas-tight and comprises a gas inlet 21 and a gas outlet 23. Gas inlet 21 can be used to fill build area 3 with an inert gas, such as nitrogen or argon, to prevent oxidation of building material 15. Together with gas outlet 23, a steady stream of protective gas can also be formed over building material 15 to carry away condensates, powder particles, and other particles thrown into the atmosphere by the process in the event of solidification with laser beams to reduce potential interference with the laser beam. Gas outlet 23 can also be used to evacuate build area 3 so that electron beams can be used as beams 11a, 11b, 11c. For this purpose, build area 3 has to be vacuum-proofed.

Control unit 5 may also have a data interface via which, for example, control programs can be imported. When executing a control program via a control interface, control unit 5 can execute all steps on the device necessary for layer-by-layer additive manufacturing, such as, for example, activating or deactivating beams 11a, 11b, 11c, deflecting them with scanning units 9a, 9b, 9c, adjusting substrate plate 13 along the Z-axis, or initiating a building material application.

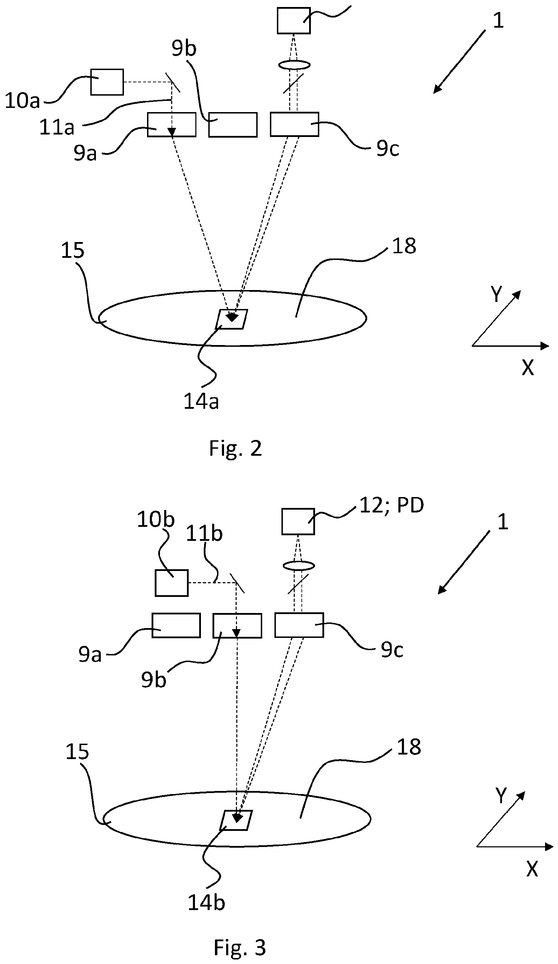

**Figs. 2** and **3** show schematic views of a manufacturing device 1 according to an embodiment of the present invention. Manufacturing device 1 comprises at least three scanning units 9a, 9b, 9c, at least two of which are capable of directing a beam 11a, 11b, 11c generated by a respective beam generating unit 10a, 10b, 10c to different target points in working plane 18, which are located within a scanning region assigned to respective scanning unit 9a, 9b, 9c, wherein the scanning regions of the at least three scanning units 9a, 9b, 9c overlap in an overlap area, and an observer optical system 12 such as a photodiode PD. In this particular case, the overlap area corresponds to the entire working plane 18.

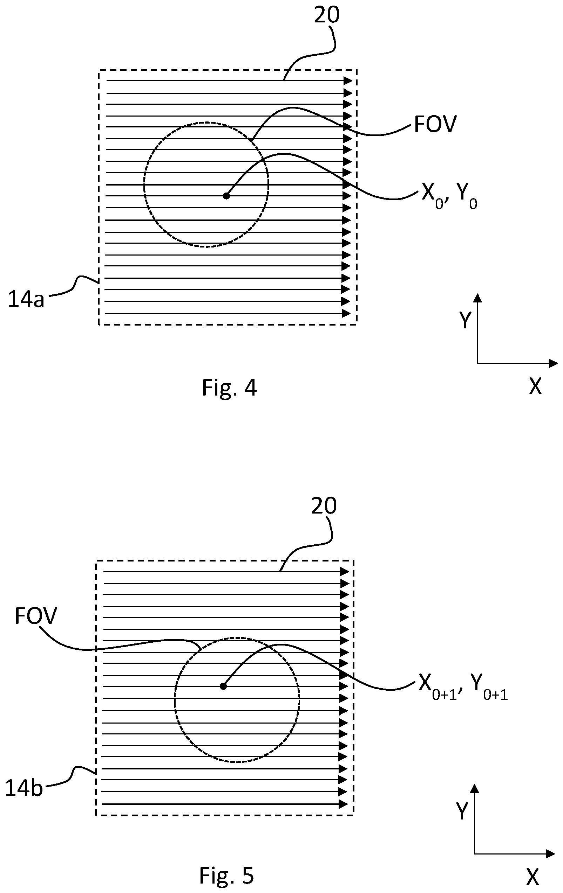

According to the inventive method, observer optical system 12 observes a portion of the overlap area, e.g. observes a so-called field of view FOV (cf. **Figs. 4-7****),** of building material 15 in working plane 18 via third scanning unit 9c.

While observer optical system 12 observes building material 15 in working plane 18, first beam generating unit 10a assigned to first scanning unit 9a irradiates via first beam 11a at least a portion of building material 15 in the overlap area to generate a first predefined pattern 14a at a predefined position X₀, Y₀ on working plane 18, which is in view of field of view FOV of observer optical system 12 (cf. **Fig. 2****).**

Subsequently, second beam generating unit 10b assigned to second scanning unit 9b irradiates via second beam 11b at least a portion of building material 15 in the overlap area to generate a second predefined pattern 14b at a predefined position X₀₊₁, Y₀₊₁ on working plane 18, which is in view of field of view FOV of observer optical system 12 (cf. **Fig. 3****).** According to this embodiment, predefined positions X₀, Y₀ and X₀₊₁, Y₀₊₁ are on the same positions on working plane 18. Nevertheless, it would also be conceivable, if the two positions X₀, Y₀ and X₀₊₁, Y₀₊₁ are at different locations on working plane 18.

**Fig. 4** shows predefined pattern 14a generated by first beam 11a of first beam generating unit 10a assigned to first scanning unit 9a. First beam 11a follows the vectors 20 to generate predefined pattern 14a, which is arranged such that the center of predefined pattern 14a is at X₀, Y₀. In this particular embodiment, predefined pattern 14a has the shape of a square. Further, predefined pattern 14a is large enough to completely cover field of view FOV of observer optical system 12.

Observer optical system 12 is arranged such that the center of its field of view FOV is at X₀, Y₀.

The measurement starts by letting first beam generating unit 10a expose predefined pattern 14a (e.g. the above mentioned square) via first beam 11a, preferably with parameters (power, speed, hatching, beam diameter) chosen so that no marking or melting on building material 15 is performed.

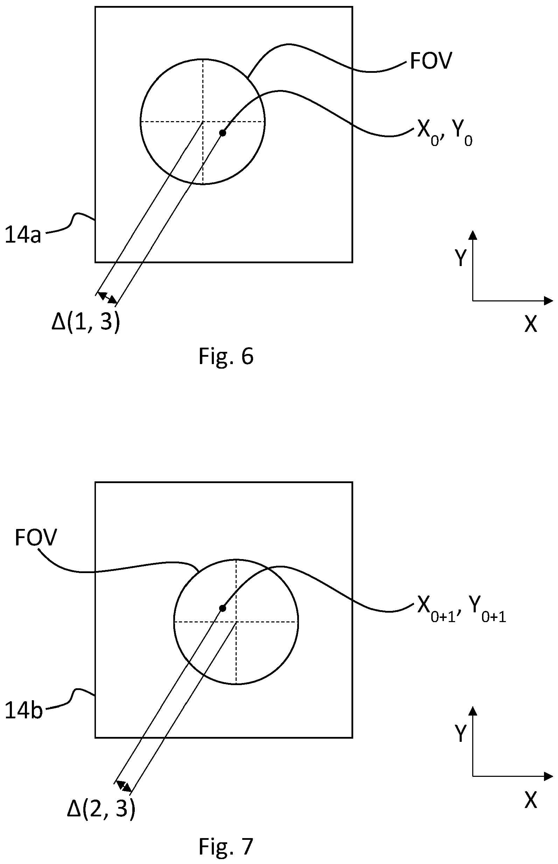

As can be inferred from **Fig. 6****,** a first heat map is generated during pattern exposure. According to this, a time-dependent signal and/or position-dependent signal is generated by means of which observer optical system 12 detects, if first beam 11a is directed on field of view FOV at a predetermined time.

The X- and Y-coordinates of the first heat map originate from the X- and Y-coordinates of first beam 11a. The signal level is the signal recorded by observer optical system 12. In these conditions, the first heat map is expected to contain 0 (i.e., only noise) everywhere, except for the region where field of view FOV of observer optical system 12 and exposed pattern 14a overlap: in this last region, the light emitted by beam 11a is scattered by building material 15 and detected by observer optical system 12, increasing the recorded signal. Thus, the first heat map is formed by pixels acquired in a temporal succession, each pixel having a definite time interval of signal acquisition.

Using suitable algorithms, the coordinates of the center of observer optical system 12 spot in the first heat map are extracted. These coordinates are the position of field of view FOV of observer optical system 12 in the beam's first scanning unit 9a frame of reference. Call this position P1 (vectorial quantity made of X- and Y-coordinates, Δ(1, 3)).

**Fig. 5** shows predefined pattern 14b generated by second beam 11b of second beam generating unit 10b assigned to second scanning unit 9b. Second beam 11b follows the vectors 20 to generate predefined pattern 14b, which is arranged such that the center of predefined pattern 14b is at X₀₊₁, Y₀₊₁. In this particular embodiment, predefined pattern 14b has the shape of a square. Further, predefined pattern 14b is large enough to completely cover field of view FOV of observer optical system 12. Further, predefined pattern 14a and 14b have the same configuration such as shape and size.

Observer optical system 12 is arranged such that the center of its field of view FOV is at X₀₊₁, Y₀₊₁.

The next measurement starts by letting second beam generating unit 10b expose predefined pattern 14b (e.g. the above mentioned square) via second beam 11b, preferably with parameters (power, speed, hatching, beam diameter) chosen so that no marking or melting on building material 15 is performed.

As can be inferred from **Fig. 7****,** a second heat map is generated during pattern exposure. According to this, a time-dependent signal and/or position-dependent is generated by means of which observer optical system 12 detects, if second beam 11b is directed on field of view FOV at a predetermined time.

The X- and Y-coordinates of the second heat map originate from the X- and Y-coordinates of second beam 11b. The signal level is the signal recorded by observer optical system 12. In these conditions, the second heat map is expected to contain 0 (i.e., only noise) everywhere, except for the region where field of view FOV of observer optical system 12 and exposed pattern 14b overlap: in this last region, the light emitted by second beam 11b is scattered by building material 15 and detected by observer optical system 12, increasing the recorded signal. Thus, the second heat map is formed by pixels acquired in a temporal succession, each pixel having a definite time interval of signal acquisition.

Using suitable algorithms, the coordinates of the center of observer optical system 12 spot in the second heat map are extracted. These coordinates are the position of field of view FOV of observer optical system 12 in the beam's second scanning unit 9b frame of reference. Call this position P2 (vectorial quantity made of X- and Y-coordinates, Δ(2, 3)).

Thus, the same tasks (exposure, map generation and spot center coordinates extraction) are carried out for second beam 11b, getting P2 (i.e., the position of field of view FOV of observer optical system 12 in the frame of reference of second scanning unit 9b).

Since the two acquisitions are carried out in rapid succession, the position of field of view FOV of observer optical system 12 is the same during both. Thus, the difference between P2 and P1 can also be interpreted as the difference between the two beams' scanning units' frames of reference, which is, in turn, misalignment error 16 between first scanning unit 9a and second scanning unit 9b or rather first beam 11a and second beam 11b.

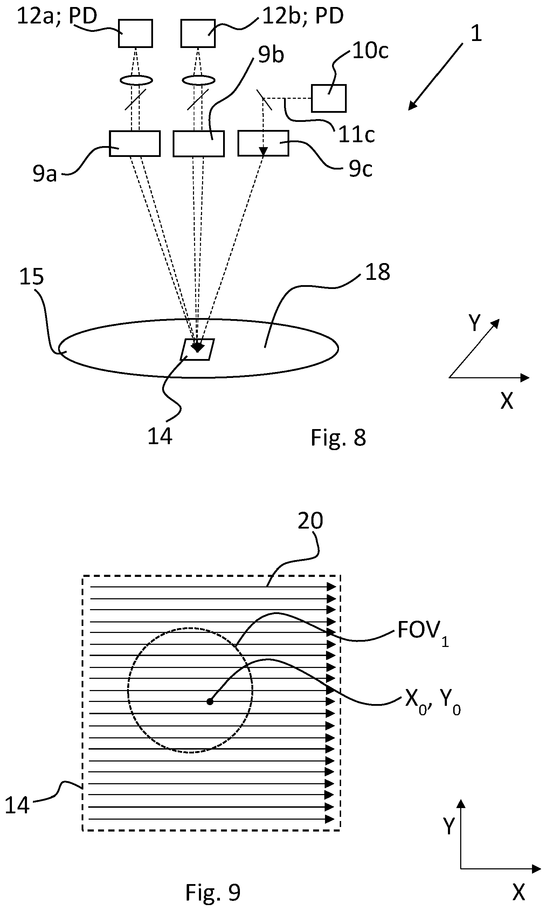

**Fig. 8** shows a schematic view of a manufacturing device 1 according to a second embodiment of the present invention. Manufacturing device 1 comprises at least three scanning units 9a, 9b, 9c, at least one of which is capable of directing a beam 11a, 11b, 11c generated by a respective beam generating unit 10a, 10b, 10c to different target points in working plane 18, which are located within a scanning region assigned to respective scanning unit 9a, 9b, 9c, wherein the scanning regions of the at least three scanning units 9a, 9b, 9c overlap in an overlap area, and at least a first observer optical system 12a assigned to first scanning unit 9a and a second observer optical system 12b assigned to second scanning unit 9b, which are capable of observing at least a portion of the overlap area. In the present embodiment, first observer optical system 12a and second observer optical system 12b are photodiodes PD, respectively. In this particular case, the overlap area corresponds to the entire working plane 18.

According to the inventive method, first observer optical system 12a and second observer optical system 12b observe a portion of the overlap area, e.g. observe a so-called field of view FOV (cf. **Figs. 9-12****),** of building material 15 in working plane 18 via first scanning unit 9a and second scanning unit 9b. In this particular case, first observer optical system 12a and second observer optical system 12b observe the same portion of the overlap area.

While first observer optical system 12a and second observer optical system 12b observe building material 15 in working plane 18, third beam generating unit 10c assigned to third scanning unit 9c irradiates via third beam 11c at least a portion of building material 15 in the overlap area to generate a predefined pattern 14 at a predefined position X₀, Y₀ on working plane 18, which is in view of field of view FOV₁ of first observer optical system 12a and in view of field of view FOV₂ second observer optical system 12b.

**Fig. 9** shows predefined pattern 14 generated by third beam 11c of third beam generating unit 10c assigned to third scanning unit 9c. Third beam 11c follows the vectors 20 to generate predefined pattern 14, which is arranged such that the center of predefined pattern 14 is at X₀, Y₀. In this particular embodiment, predefined pattern 14 has the shape of a square. Further, predefined pattern 14 is large enough to completely cover field of view FOV₁ of first observer optical system 12a and second observer optical system 12b.

First observer optical system 12a and second observer optical system 12b are arranged such that the center of their field of view FOV₁, FOV₂ is at X₀, Y₀.

The measurement starts by letting third beam generating unit 10c expose predefined pattern 14 (e.g. the above mentioned square) via third beam 11c, preferably with parameters (power, speed, hatching, beam diameter) chosen so that no marking or melting on building material 15 is performed.

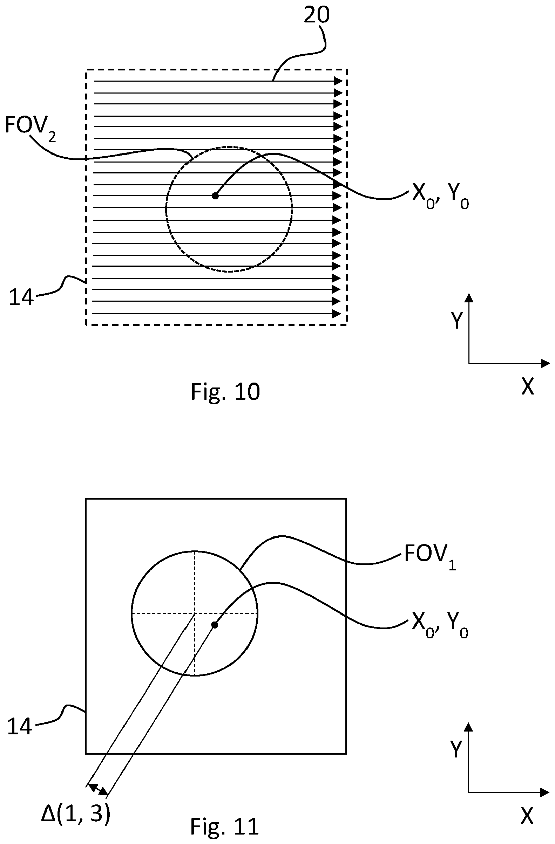

As can be inferred from **Fig. 11****,** a first heat map is generated during pattern exposure. According to this, a time-dependent signal is generated by means of which first observer optical system 12a detects, if third beam 11c is directed on field of view FOV₁ at a predetermined time.

The X- and Y-coordinates of the first heat map originate from the X- and Y-coordinates of third beam 11c. The signal level is the signal recorded by first observer optical system 12a. In these conditions, the first heat map is expected to contain 0 (i.e., only noise) everywhere, except for the region where field of view FOV₁ of first observer optical system 12a and the exposed pattern 14 overlap: in this last region, the light emitted by third beam 11c is scattered by building material 15 and detected by first observer optical system 12a increasing the recorded signal. Thus, the first heat map is formed by pixels acquired in a temporal succession, each pixel having a definite time interval of signal acquisition.

Using suitable algorithms, the coordinates of the center of first observer optical system 12a spot in the first heat map are extracted. These coordinates are the position of the field of view FOV₁ of first observer optical system 12a in the beam's third scanning unit 9c frame of reference. Call this position P1 (vectorial quantity made of X- and Y-coordinates, Δ(1, 3)).

**Fig. 10** shows again predefined pattern 14 generated by third beam 11c of third beam generating unit 10c assigned to third scanning unit 9c. Third beam 11c follows the vectors 20 to generate predefined pattern 14, which is arranged such that the center of predefined pattern 14 is at X₀, Y₀. In this particular embodiment, predefined pattern 14 has the shape of a square. Further, predefined pattern 14 is large enough to completely cover field of view FOV₂ of second observer optical system 12b.

First observer optical system 12a and second observer optical system 12b are arranged such that the center of their field of view FOV₁, FOV₂ is at X₀, Y₀.

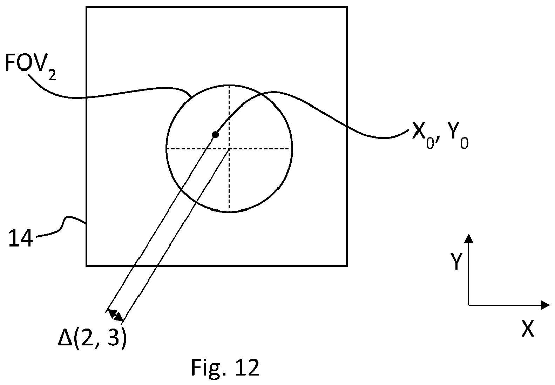

As can be inferred from **Fig. 12****,** a second heat map is generated during pattern exposure. According to this, a time-dependent signal is generated by means of which second observer optical system 12b detects, if third beam 11c is directed on field of view FOV₂ at a predetermined time.

The X- and Y-coordinates of the second heat map originate from the X- and Y-coordinates of third beam 11c. The signal level is the signal recorded by second observer optical system 12b. In these conditions, the second heat map is expected to contain 0 (i.e., only noise) everywhere, except for the region where field of view FOV₂ of second observer optical system 12b and the exposed pattern 14 overlap: in this last region, the light emitted by third beam 11c is scattered by building material 15 and detected by second observer optical system 12b, increasing the recorded signal. Thus, the second heat map is formed by pixels acquired in a temporal succession, each pixel having a definite time interval of signal acquisition.

Using suitable algorithms, the coordinates of the center of second observer optical system 12b spot in the second heat map are extracted. These coordinates are the position of field of view FOV₂ of second observer optical system 12b in the beam's third scanning unit 9c frame of reference. Call this position P2 (vectorial quantity made of X- and Y-coordinates, Δ(2, 3)).

Thus, the same tasks (exposure, map generation and spot center coordinates extraction) are carried out for second observer optical system 12b, getting P2 (i.e., the position of the field of view FOV₂ of second observer optical system 12b in the frame of reference of third scanning unit 9c).

Since the two acquisitions are carried out in rapid succession or simultaneously, the position of predefined pattern 14 generated by third beam 11c is the same during both. Thus, the difference between P2 and P1 can be interpreted also as the difference between the two beams' scanning units' frames of reference, which is, in turn, misalignment error 16 between first scanning unit 9a and second scanning unit 9b.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

Although the preferred embodiments of this invention have been described herein, improvements and modifications may be incorporated without departing from the scope of the following claims.

### List of reference signs

- 1: manufacturing device
- 3: build area
- 5: control unit
- 9a, 9b, 9c: scanning unit
- 10a, 10b, 10c: beam generating unit
- 11a, 11b, 11c: beam
- 12; 12a, 12b: observer optical system
- 13: substrate plate
- 14; 14a, 14b: predefined pattern
- 15: building material (powder)
- 16: misalignment error
- 17: application device (coater)
- 18: working plane
- 19: three-dimensional object
- 20: vector
- 21: gas inlet
- 23: gas outlet
- Δ: offset
- FOV: field of view
- PD: photodiode
- X₀, Y₀; X₀₊₁, Y₀₊₁: predefined position/point

## Claims

1. A calibration method for calibrating a manufacturing device (1) for additively producing a three-dimensional object (19) by applying layer by layer and selectively solidifying a building material (15), preferably a powder, within a build area (3) in a working plane (18),
wherein the manufacturing device (1) comprises at least three scanning units (9a, 9b, 9c), at least two of which are capable of directing a beam (11a, 11b, 11c) generated by a respective beam generating unit (10a, 10b, 10c) to different target points in the working plane (18), which are located within a scanning region assigned to the respective scanning unit (9a, 9b, 9c), wherein the scanning regions of the at least three scanning units (9a, 9b, 9c) overlap in an overlap area,
wherein the calibration method comprises the following steps:
- directing an observer optical system (12) via the third scanning unit (9c) on at least a portion of the overlap area,
- irradiating at least a portion of the building material (15) in the overlap area with the first beam generating unit (10a) assigned to the first scanning unit (9a) to generate a first predefined pattern (14a) at a predefined position (X₀, Y₀) on the working plane (18), which is in view of the observer optical system (12), and
- irradiating at least a portion of the building material (15) in the overlap area with the second beam generating unit (10b) assigned to the second scanning unit (9b) to generate a second predefined pattern (14b) at a predefined position (X₀₊₁, Y₀₊₁) on the working plane (18), which is in view of the observer optical system (12),
wherein the observer optical system (12) detects the positionings of the first predefined pattern (14a) and the second predefined pattern (14b), and
wherein a control unit (5) compares the positionings of the first predefined pattern (14a) and the second predefined pattern (14b) to compute a misalignment error (16) between the first scanning unit (9a) and the second scanning unit (9b).

2. A calibration method for calibrating a manufacturing device (1) for additively producing a three-dimensional object (19) by applying layer by layer and selectively solidifying a building material (15), preferably a powder, within a build area (3) in a working plane (18),
wherein the manufacturing device (1) comprises at least three scanning units (9a, 9b, 9c), at least one of which is capable of directing a beam (11a, 11b, 11c) generated by a respective beam generating unit (10a, 10b, 10c) to different target points in the working plane (18), which are located within a scanning region assigned to the respective scanning unit (9a, 9b, 9c), wherein the scanning regions of the at least three scanning units (9a, 9b, 9c) overlap in an overlap area,
wherein the calibration method comprises the following steps:
- directing at least a first observer optical system (12a) via the first scanning unit (9a) and a second observer optical system (12b) via the second scanning unit (9b) on at least a portion of the overlap area,
- irradiating at least a portion of the building material (15) in the overlap area with the third beam generating unit (10c) assigned to the third scanning unit (9c) to generate a predefined pattern (14) at a predefined position (X₀, Y₀) on the working plane (18),
wherein at least the first observer optical system (12a) and the second observer optical system (12b) detect the positioning of the predefined pattern (14) with respect to the respective observer optical system (12a, 12b), and
wherein a control unit (5) compares the positionings of the predefined pattern (14) detected by the first observer optical system (12a) and the predefined pattern (14) detected by the second observer optical system (12b) to compute a misalignment error (16) between the first scanning unit (9a) and the second scanning unit (9b).

3. The calibration method according to claim 1 or 2, wherein the misalignment error (16) between the first scanning unit (9a) and the second scanning unit (9b) is defined by an offset (Δ(1, 3), Δ(2, 3)) in X-direction and/or Y-direction parallel to the working plane (18).

4. The calibration method according to any of claims 1 to 3, wherein the misalignment error (16) is corrected by adjusting the positioning of the first scanning unit (9a) and/or the second scanning unit (9b), in particular by minimizing the offset (Δ(1, 3), Δ(2, 3)) between the first scanning unit (9a) and the second scanning unit (9b) in X-direction and/or Y-direction parallel to the working plane (18).

5. The calibration method according to any of claims 1 to 4, wherein the observer optical system (12; 12a, 12b) is a photodiode (PD), in particular a single pixel photodiode.

6. The calibration method according to claim 5, wherein the photodiode (PD) is equipped with an optical setup that:
defines a field of view (FOV) of the photodiode (PD) as a predefined area on the working plane (18), and/or
filters the light so that only a predefined range of wavelengths can be detected by the photodiode (PD).

7. The calibration method according to claim 6, wherein the field of view (FOV) of the photodiode (PD) is configured to capture at least the predefined position (X₀, Y₀) and/or the predefined position (X₀₊₁, Y₀₊₁) on the working plane (18), and
wherein the field of view (FOV) preferably comprises a diameter of 5 mm or less, more preferably comprises a diameter of 3 mm or less, and even more preferably comprises a diameter in a range of 1 mm and 2 mm.

8. The calibration method according to any of claims 1 to 7, wherein by irradiating the building material (15) in the working plane (18), the building material (15) is heated up to a temperature below the melting point of the building material (15).

9. The calibration method according to any of claims 1 to 8, wherein the predefined pattern (14; 14a, 14b) is centered at the predefined position (X₀, Y₀) or the predefined position (X₀₊₁, Y₀₊₁), and wherein the predefined pattern (14; 14a, 14b) is large enough to completely cover the field of view (FOV) of the photodiode (PD).

10. The calibration method according to any of claims 1 to 9, wherein the predefined pattern (14; 14a, 14b) has the shape of a polygon, star or circle.

11. The calibration method according to any of claims 6 to 10, wherein the field of view (FOV) of the photodiode (PD) is centered at the predefined position (X₀, Y₀) or the predefined position (X₀₊₁, Y₀₊₁) to generate a heat map or a time-dependent signal by means of which a shift of the predefined pattern (14; 14a, 14b) with respect to the field of view (FOV) of the photodiode (PD) can be detected.

12. A manufacturing method for additively producing a three-dimensional object (19) by applying layer by layer and selectively solidifying a building material (15), comprising the following steps:
applying a layer of the building material (15) in a build area (3) within a working plane (18),
solidifying the layer of the building material (15) at positions that correspond to the respective cross-section of the object (19) by selective irradiation within the build area (3) by at least one beam (11a, 11b, 11c) of a radiation suited for solidifying the building material (15), and
repeating the steps of applying and solidifying until the three-dimensional object (19) is completed,
wherein a calibration method according to any of claims 1 to 11 is carried out at least once before the building process and/or during the building process.

13. A computer program which can be loaded into a programmable control unit (5) which comprises program code means for executing all the steps of a calibration method according to any of claims 1 to 11 and/or a manufacturing method according to claim 12 when the computer program is executed on the control unit (5).

14. A control device for a manufacturing device (1) for additively producing a three-dimensional object (19) by applying layer by layer and selectively solidifying a building material (15), wherein the manufacturing device (1) comprises:
an application device (17) for applying a layer of the building material (15) to a build area (3) within a working plane (18), and
at least three scanning units (9a, 9b, 9c), at least one of which is capable of directing a beam (11a, 11b, 11c) to different target points in the working plane (18), which target points are located within a scanning region assigned to a respective scanning unit (9a, 9b, 9c), wherein the scanning regions of the at least three scanning units (9a, 9b, 9c) overlap in an overlap area,
wherein a control unit (5) is configured to control the manufacturing device (1) such that it:
repeats the steps of applying and selectively solidifying until the object (19) is completed, and
carries out a calibration method according to any of claims 1 to 11 at least once before and/or during of building of the object (19).

15. A manufacturing device (1) for additively producing a three-dimensional object (19) by applying layer by layer and selectively solidifying a building material (15), comprises
an application device (17) for applying a layer of the building material (15) to a build area (3) within a working plane (18), and
at least three scanning units (9a, 9b, 9c), at least one of which is capable of directing a beam (11a, 11b, 11c) to different target points in the working plane (18), which target points are located within a scanning region assigned to a respective scanning unit (9a, 9b, 9c), wherein the scanning regions of the at least three scanning units (9a, 9b, 9c) overlap in an overlap area,
wherein the manufacturing device (1) is configured and/or controlled such that:
it repeats the steps of applying and selectively solidifying until the object (19) is completed, and
carries out a calibration method according to any of claims 1 to 11 at least once before and/or during building of the object (19).
